# EUROPÄISCHE PATENTSCHRIFT

(11) **EP 0 643 893 B1**
(45) Veröffentlichungstag und Bekanntmachung des Hinweises auf die Patenterteilung: **11.09.1996**
(21) Anmeldenummer: 93912805.4
(22) Anmeldetag: 27.05.1993
(51) Int. Cl.: H04L 12/40

(54) **TEILNEHMERSTATION DER GEBÄUDESYSTEMTECHNIK**
SUBSCRIBER STATION REALIZED ACCORDING TO THE BUILDING BLOCK TECHNOLOGY
POSTE D'ABONNE REALISE SELON LA TECHNIQUE DE LA CONSTRUCTION MODULAIRE

(30) Priorität: 02.06.1992 EP 92109307
(43) Veröffentlichungstag der Anmeldung: 22.03.1995
(73) Patentinhaber: SIEMENS AKTIENGESELLSCHAFT, 80333 München (DE)
(72) Erfinder: ZIERHUT, Hermann, D-800 München 83 (DE)
(86) Internationale Anmeldenummer: EP9301332
(87) Internationale Veröffentlichungsnummer: WO9325027

(56) Entgegenhaltungen:
- EP-A- 0 364 700
- EP-A- 0 419 711
- US-A- 5 113 098

## Beschreibung

Die Erfindung bezieht sich auf eine Teilnehmerstation der Gebäudesystemtechnik, die mit weiteren Stationen über einen Bus in Verbindung steht, auf dem Impulse für kodierte Informationen übertragen werden, die in der Station mittels zumindest eines Komparators verarbeitet werden. Bei langen Busleitungen kann die Induktivität der Leitung und der Ankoppelglieder der Teilnehmerstationen dazu führen, daß aus Rechteckimpulsen Impulse mit stark fallendem Dach werden. Bei Verarbeitung mittels eines Komparators mit einer bestimmten Schaltschwelle kann das dazu führen, daß der Impuls mit seiner ansteigenden Flanke zur Einschaltung führt und daß die Ausschaltung bereits im abfallenden Impulsdach erfolgt. Eine Verarbeitung derartig verstümmelter Impulse führt zu Verlust an Information.

Die Signalbeeinträchtigung ist besonders groß, wenn die Teilnehmerstationen induktiv angekoppelt sind.

Der Erfindung liegt die Aufgabe zugrunde, eine Teilnehmerstation zu entwickeln, die durch den Anstieg an Induktivität nicht beeinträchtigt wird.

Die Lösung der geschilderten Aufgabe erfolgt nach der Erfindung durch eine Teilnehmerstation nach Patentanspruch 1. Danach ist der Komparator derart eingestellt, daß seine Ausschaltschwelle niedriger liegt als seine Einschaltschwelle. Dadurch ist sichergestellt, daß auch bei einem abfallenden Impulsdach der Impuls in größerer Breite übertragen wird und in seiner Zeitdauer im Empfänger richtig dargestellt wird.

Eine bekannte Busankopplerschaltung arbeitet mit einem Treiber mit Hysterese (EP-A-0 364 700). Hierbei bestimmt die Hysterese der Einschaltschwelle im eingeschwungenen Zustand die Empfindlichkeit des Empfängers. Ein Komparator, um ein bestimmtes Ein- und Ausschalten zu erzielen, ist nicht vorgesehen.

Um in der Praxis das volle Impulsdach vor der Ausschaltung des Komparators zu nutzen, ist es in der Praxis günstig, wenn die Ausschaltschwelle nur etwa 50 bis 30 % der Amplitude der Einschaltschwelle beträgt.

Beim Bus der European Installation Bus Association, EIBA, ist es in der Praxis günstig, wenn die Einschaltschwelle des Komparators bei 1 Volt und die Ausschaltschwelle bei 0,5 bis 0,3 Volt liegt.

Zum Eliminieren von Störimpulsen auf der Busleitung ist es günstig, eine geeignete Serien LC-Schaltung vorzusehen. Hierfür kann die Teilnehmerstation durch ein LC-Glied an den Bus angekoppelt werden. Vorteilhafterweise kann dieses LC-Glied die Übertragerschaltung sein, mit dem die Teilnehmerstation am Bus angekoppelt ist, wie es beim "EIBus" üblich ist (beispielsweise EP-A-0 117 678).

Die Erfindung soll nun anhand von in der Zeichnung grob schematisch wiedergegebenen Ausführungsbeispielen näher erläutert werden:
- In FIG 1: ist eine Teilnehmerstation veranschaulicht, die durch eine Übertragerschaltung an den Bus angekoppelt ist.
- In FIG 2: ist in einem Diagramm ein Impuls mit Einschalt-und Ausschaltschwelle des Komparators wiedergegeben. Auf der Ordinate ist die Spannung U und auf der Abszisse die Zeit t aufgetragen.

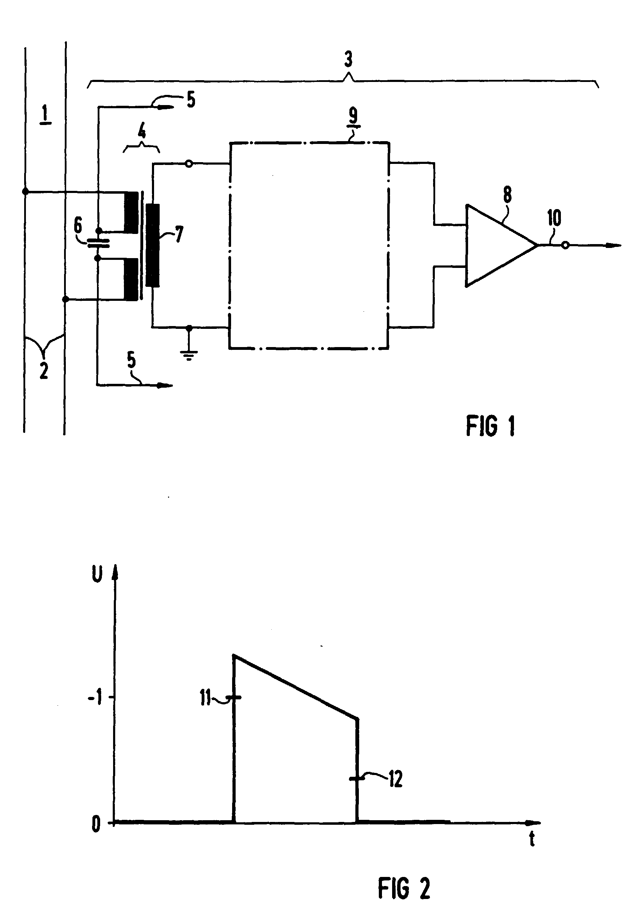

In FIG 1 ist an einem Bus 1 mit den Leitern 2 eine Teilnehmerstation 3 mittels eines Übertragers 4 induktiv angeschlossen. Die Busleiter 2 führen Gleichspannung für die Bordnetzversorgung von Teilnehmerstationen und Wechselspannung für Signalverarbeitung. Idealisiert wird hinsichtlich eines Bezugspotentials mit Rechteckimpulsen gearbeitet. Die Gleichspannung für das Bordnetz der Teilnehmerstation 3 wird über Bordnetzleitungen 5 abgenommen. Ein Koppelkondensator 6 schließt zwischen den beiden Primärwicklungen des Übertragers 4 einen Durchgangspfad für Wechselspannungsignale für die Signalverarbeitung. An der Sekundärwicklung 7 des Übertragers 4 ist ein Komparator 8 angeschlossen. Koppelkondensator 6 und die Induktivität des Übertragers bilden einen LC-Kreis. Auf der Eingangsseite des Komparators kann eine elektronische Auswerteschaltung 9 vorgeordnet sein. Die Ausgangsseite 10 des Komparators 8 führt die bearbeiteten Signale einer weiteren Auswertung zu.

Der Komparator 8 ist derart eingestellt, daß seine Ausschaltschwelle 12 nach FIG 2 niedriger liegt als seine Einschaltschwelle 11, wobei die Schaltschwellen jeweils dem Betrag nach ohne Vorzeichen zu verstehen sind. Im Ausführungsbeispiel nach FIG 2 liegt die Einschaltschwelle 11 bei 1 V und die Ausschaltschwelle 12 bei 0,3 V.

Bisher war es üblich, bei einem induktiv angekoppelten Bus einen Komparator für den Empfänger einzusetzen, der mit einer definierten Schaltschwelle, beispielsweise von 0,7 V gearbeitet hat. Dies hatte den Nachteil, daß ein empfangender Teilnehmer, der weit vom sendenden Teilnehmer entfernt angeordnet ist, über einen großen Kabelwiderstand angesteuert wurde, wodurch die bereits geschilderte Impulsverkürzung auftrat. Durch den mit der Zeit ansteigenden Magnetisierungsstrom des Übertrager in der empfangenden Teilnehmerstation entsteht auf einer langen Leitung dann ein mit der Zeit größer werdender Spannungsabfall, so daß die dem Komparator zugeführt Spannung mit der Zeit bis zum Ausschalten kleiner wird, so daß ein abfallendes Impulsdach entsteht, bei dem bereits ausgeschaltet wurde. Bei der erfindungsgemäßen Teilnehmerstation wird dieser Nachteil vermieden, so daß auch ein Impuls mit abfallendem Impulsdach in seiner zeitlichen Breite voll genutz werden kann. Dieser Vorteil kommt bei Teilnehmerstationen, die induktiv angekoppelt sind, zwar besonders stark zum Tragen; die entsprechenden Vorteile können jedoch auch bei andersartig angekoppelten Teilnehmerstationen genutzt werden.

## Patentansprüche

1. Teilnehmerstation der Gebäudesystemtechnik, die mit weiteren Stationen über einen Bus in Verbindung steht, auf dem Impulse für kodierte Informationen übertragen werden, die in der Station mittels zumindest eines Komparators verarbeitet werden, **dadurch gekennzeichnet**, daß der Komparator (8) derart eingestellt ist, daß seine Ausschaltschwelle (12) bei etwa 50 % seiner Einschaltschwelle (11) liegt oder niederiger, um den Impuls in seiner Zeitdauer im Empfänger richtig darzustellen.

2. Teilnehmerstation nach Anspruch 1,
**dadurch gekennzeichnet**, daß die Ausschaltschwelle (12) niedriger als bei 30 % der Amplitude der Einschaltschwelle (11) liegt.

3. Teilnehmerstation nach Anspruch 2,
**dadurch gekennzeichnet**, daß die Einschaltschwelle (11) bei ca. 1 V und die Ausschaltschwelle (12) bei 0,5 bis 0,3 V liegt.

4. Teilnehmerstation nach einem der Ansprüche 1 - 3,
**dadurch gekennzeichnet**, daß die Teilnehmerstation durch ein LC-Glied an den Bus angekoppelt ist.

5. Teilnehmerstation nach Anspruch 4,
**dadurch gekennzeichnet**, daß als LC-Glied ein Übertrager (4) mit Koppelkondenstor (6) dient, mit dem die Teilnehmerstation (3) am Bus (1) angekoppelt ist.

## Claims

1. Subscriber station of building system technology, the station being connected to additional stations by way of a bus, on which pulses for coded information are transmitted, which are processed in the station by means of at least one comparator,
characterized in that the comparator (8) is adjusted in such a way that its disconnection threshold (12) lies at about 50% of its connection threshold (11) or lower, in order to correctly represent the duration of the pulse in the receiver.

2. Subscriber station according to claim 1, characterized in that the disconnection threshold (12) is lower than 30% of the amplitude of the connection threshold (11).

3. Subscriber station according to claim 2, characterized in that the connection threshold (11) is at about 1 v and the disconnection threshold (12) is at 0.5 to 0.3 v.

4. Subscriber station according to one of claims 1 to 3, characterized in that the subscriber station is coupled to the bus by an LC-element.

5. Subscriber station according to claim 4, characterized in that as LC-element a transformer (4) with coupling capacitor (6) is used, with which the subscriber station (3) is coupled to the bus (1).

## Revendications

1. Station d'abonné d'un système pour installation des bâtiments, qui est reliée à d'autres stations par l'intermédiaire d'un bus, sur lequel des impulsions pour des informations codées peuvent être transmises, lesquelles sont traitées dans la station au moyen d'au moins un comparateur, caractérisée en ce que le comparateur (8) est réglé, de telle sorte que son seuil (12) de coupure soit à peu près à 50 % de son seuil (11) de conduction ou soit plus bas que cela, pour représenter correctement la durée de l'impulsion dans le récepteur.

2. Station d'abonné suivant la revendication 1,
caractérisée en ce que le seuil (12) de coupure est plus bas que 30 % de l'amplitude du seuil (11) de conduction.

3. Station d'abonné suivant la revendication 2,
caractérisée en ce que le seuil (11) de conduction est d'environ 1 Volt et le seuil (12) de coupure est compris entre 0,5 et 0,3 Volt.

4. Station d'abonné suivant l'une des revendications 1 à 3,
caractérisée en ce que la station d'abonné est couplée au bus par un élément LC.

5. Station d'abonné suivant la revendication 4,
caractérisée en ce qu'un transformateur (4) ayant un condensateur (6) de couplage, par lequel la station (3) d'abonné est couplée au bus (1), sert d'élément LC.
